Europäisches Patentamt

European Patent Office

Office européen des brevets

(11) Publication number: 0 381 898
A2

## EUROPEAN PATENT APPLICATION

(21) Application number: 89313445.2

(22) Date of filing: 21.12.89

(51) Int. Cl.5: F16C 39/06

(30) Priority: 27.12.88 US 290028

(43) Date of publication of application: .
16.08.90 Bulletin 90/33

(84) Designated Contracting States:
DE FR GB IT

(71) Applicant: PROTO-TECHNOLOGY
CORPORATION
591 Poquonnock Road
Groton Connecticut 06340(US)

(72) Inventor: Hendrickson, Tom A.
526 Hillcrest Road
Ridgewood New Jersey 07450(US)
Inventor: Leonard, John S.
Sterling City Road Hamburg
Lyme Connecticut 06371(US)

(74) Representative: Read, Matthew Charles et al
Venner Shipley & Co. 368 City Road
London EC1V 2QA(GB)

(54) Method and apparatus for cancelling vibrations of rotating machines with active magnetic bearings.

(57) A method and apparatus for reducing the vibrations of a rotating machine equipped with an active magnetic suspension including at least two vibration detectors (7) located on the machine frame for detecting disturbance applied to the frame, and at least an additional selective feedback circuit (18) which generates cancelling vibrations by transforming the sensed residual vibrations into a plurality of components which together define the vibrations at a plurality of different locations in the frequency domain, separately modifying the independent components and transforming the modified components into a drive signalt to the magnet suspension control (13, Ex, Ey).

# METHOD AND APPARATUS FOR CANCELLING VIBRATIONS OF ROTATING MACHINES WITH ACTIVE MAGNETIC BEARINGS

## BACKGROUND OF THE INVENTION

This invention relates to a method and apparatus for reducing vibrations in a rotating machine. More particularly, this invention relates to a method and apparatus for reducing vibrations in a rotating machine wherein the rotor is mounted on a frame by way of radial active magnetic bearings and with radial detectors for detecting the position of the rotor and with additional detectors for detecting frame vibrations and servo-control circuits connected to the detectors and the electromagnetic coils for the magnetic bearings.

U.S. Patent No. 4,626,754 entitled "Method and Device for Reducing the Vibrations of Rotating Machines Equipped with an Active Magnetic Bearing Suspension" is illustrative of a conventional method of reducing vibrations in a rotating machine. Reduction of the effects originating from the existence of an unbalance on the rotor are effected by creating a drop in gain in the servo-control circuit inside a very narrow frequency band which is a direct function of the speed of rotation of the rotor which creates an automatic balancing of the rotor by causing its rotational axis to coincide with its inertial axis. Stabilization of the frame of the rotating machine and the prevention of repetitive vibrations generated by elements linked to the rotor of the machine or to other reference sources from being transmitted to the frame is reached with frame mounted vibration detectors and additional selective feedback control loops with narrow band and high gain of which the central frequency is synchronized with a reference frequency and to which are applied the signals produced by the vibration detectors.

It has been shown that the automatic balancing technique of the conventional method is effective in suppressing those vibrations originating from rotor unbalance. However, frame vibrations have been shown to be less than effectively suppressed. Vibrations of the bearing pedestals can be greatly reduced, but at other areas of the machine frame the vibration suppression is less effective due to varying impedances and phase shifts.

## SUMMARY OF THE INVENTION

With the foregoing in mind, it is an object of this invention to provide an improved method and apparatus which, when applied to a wide variety of rotating machinery, makes the rotating machinery inherently vibration free and does ot generate significant vibration that could be detrimental to an industrial process, environmental condition, or any other requirement for minimum vibration rotating machinery.

It is a further object of the invention to provide an improved method and apparatus which makes rotating machinery operationally more reliable and less subject to wear.

It is a further object of the invention to provide an improved method and apparatus whereby, when applied to a wide variety of rotating machinery, maintenance requirements are significantly reduced.

It is a further object of the invention to provide an improved method and apparatus whereby, when applied to a wide variety of rotating machinery, the rotors of the machinery are maintained in continuously precise alignment by an electronic control system utilizing rotor position indicators in combination with shaft position control through magnetic forces.

It is a further object of the invention to provide an improved method and apparatus whereby, when applied to a wide variety of rotating machinery, the rotors of the machinery are maintained in perfect balance at all times, even though conditions which would normally result in unbalance forces may change.

It is a further object of the invention to provide an improved method and apparatus whereby, when applied to a wide variety of rotating machinery, the stators or frames of the machinery which may vibrate are caused to have such vibrations greatly suppressed. Such vibrations may be related to, or may be completely unrelated to, the rotational speed of the machinery.

Stabilization of the frame of the rotating machine and the prevention of repetitive vibrations generated by elements linked to the rotor of the machine or to other reference sources from being transmitted to the frame is attained by at least two vibration detectors located on the frame to determine the vibrations of the rotating machine. The measured vibratory signal is analyzed and the appropriate modifications to the bearing control signal effected by one of several adaptive signal processing techniques. If the disturbance is rotor induced, such as shaft imbalance, the bearing control signal will be reduced at the specific frequency of the disturbance to decouple the rotor from the stator and allow the rotor to rotate about its inertial axis, resulting in a balanced system. If the disturbance is other than rotor induced, the bearing control signal will be increased at the specific frequency of the disturbance to couple the rotor to the stator and cause the rotor to act as an inertial mass which moves so as to compensate for the disturbance of the frame.

## BRIEF DESCRIPTION OF THE DRAWINGS

The accompanying drawings, referred to herein and constituting a part hereof, illustrate a preferred embodiment of the invention and, together with the description, serve to explain the principles of the invention, wherein:

Fig. 1 illustrates a basic control system for an active magnetic bearing suspension system including an automatic balancing feature;

Fig. 2A is a schematic diagram of a control system according to the instant invention;

Fig. 2B is a side sectional view of the position and vibration detectors relative to the bearing assemblies;

Fig. 3 is a flow diagram according to the instant invention;

Fig. 4 is a frequency plot with the noise cancellation control circuit off;

Fig. 5 is a frequency plot with the noise cancellation control circuit on; and

Fig. 6 is a table illustrating the quantitative effect of the noise cancellation control circuit.

## DETAILED DESCRIPTION OF THE DRAWINGS

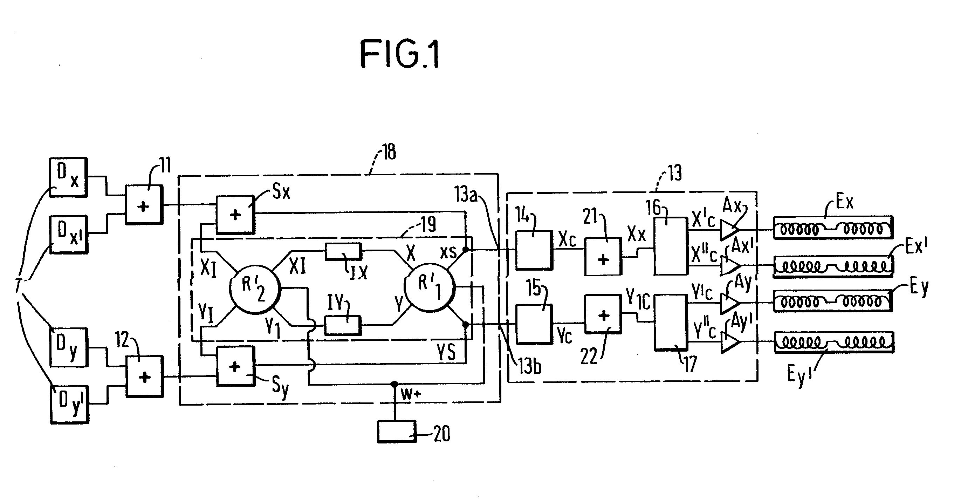

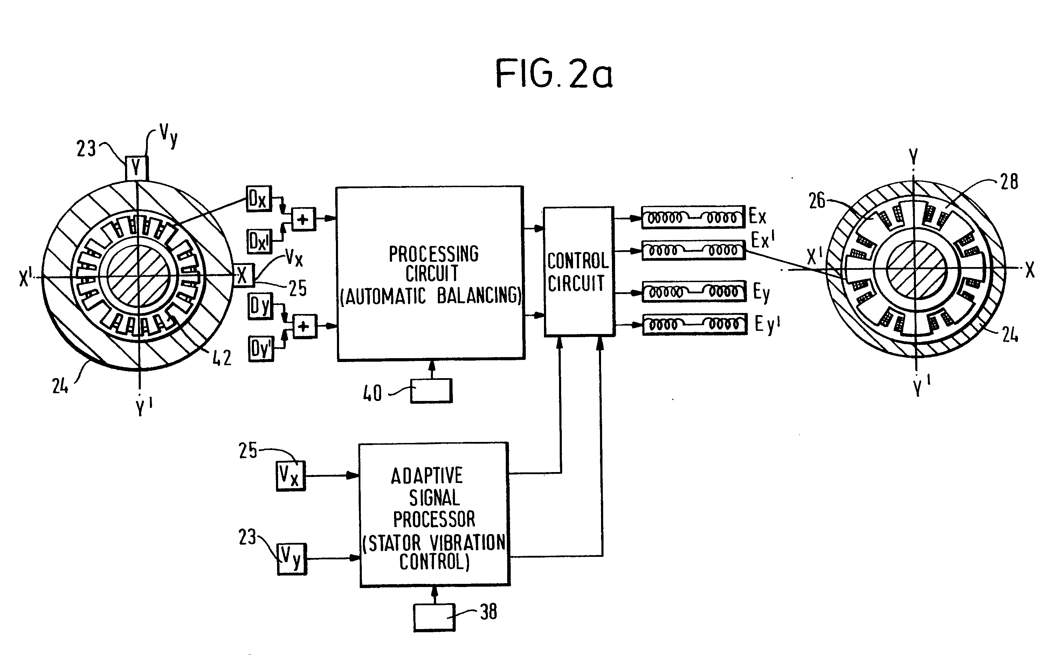

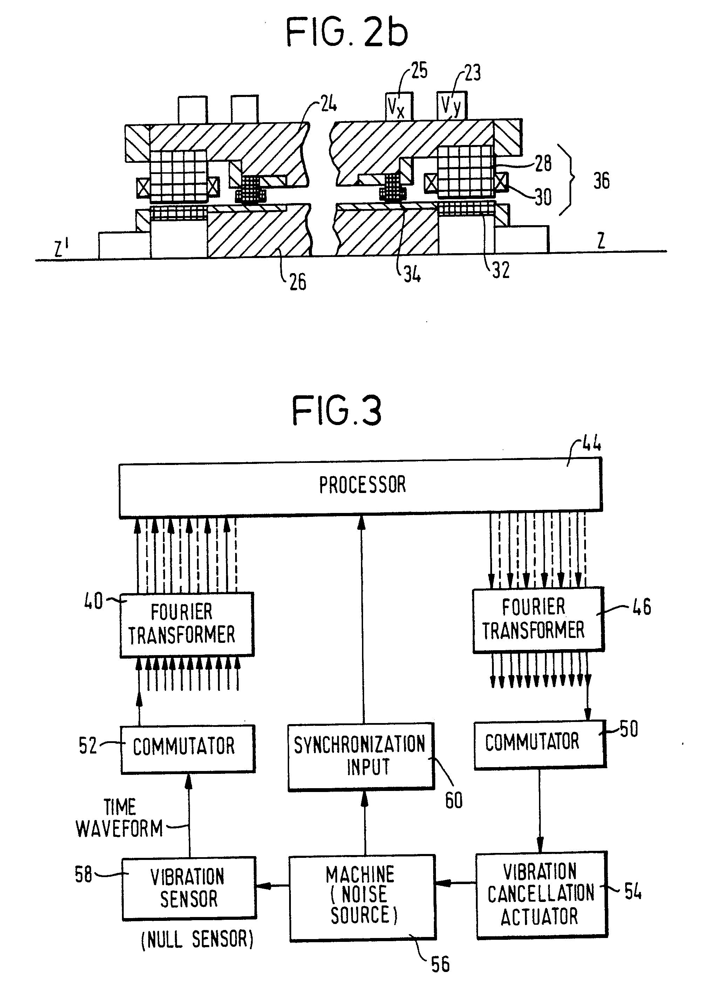

The method and apparatus according to the invention generally comprises a control system to control an active magnetic suspension system (Fig. 1) without control loop(s) for stator vibration control combined with a control system based on state-of-the-art adaptive signal processing techniques to effectively reduce the total vibrational forces of rotating machinery (Figs. 2A and 2B).

Referring to Fig. 1, a control system is illustrated for control of an active magnetic suspension system. Shown in Fig. 1 are position detectors 7, adders 11, 12, 21, 22, error signal Sx, Sy, feedback circuits XS, YS, automatic balancing processing circuit 18, control circuit 13, bearing electromagnets Ex-Ex′ and Ey-Ey′, amplifiers Ax-Ax′ and Ay-Ay′, phase convertors 16, 17, phase bearing advancing networks 14, 15, tachometric converter 20, and narrow frequency filter 19 with high negative gain centered on the rotational frequency.

Shown in Fig. 2A, are vibration detectors 23, 25, position detectors Dx-Dx′ and Dy-Dy′, rotor 26, fixed armature 28, frame 24, electromagnetic coils Ex-Ex′ and Ey-Ey′, synchronization input 38, tachometer converter 40, and position detector windings 42.

Shown in Fig. 2B are frame 24, rotor 26, radial magnetic bearing 36 including annular armature 32 (fixed to rotor 26) and fixed armature 28, radial position detector 34, electromagnetic coils 30, and vibration detectors 23, 25 (mutually perpendicular).

The machine may also be provided with a set of secondary auxiliary bearings adapted to contact and support the rotatable shaft in the event of failure of the primary magnetic bearings. The secondary auxiliary bearings may be positioned to prevent the rotatable shaft from contacting the primary magnetic bearings in the event of a primary magnetic bearing failure.

The prior art control system to control the active magnetic suspension system uses inductive sensors, to detect the exact radial location of the machine rotor to provide position feedback to the control electronics. The sensors utilize the air gap between the rotor and the stator for their response signal generation. As the air gap increases or decreases, the inductance of the sensor inversely decreases or increases. This change in inductance with shaft location provides the position signal required for closed loop servo control of the primary bearing support system.

The displacement signal is demodulated and filtered and is then compared to a position reference signal. Any difference between the two signals generates an error signal which is used to control the rotor position. The error signal is amplified in the primary gain section of the control loop and the optimum control loop gain is preset and the general bearing stiffness characteristics are defined. The amplified error signal is filtered to remove high frequency harmonics and enters into a signal processing network.

A logic decision is made as to which bearing quadrants are to be commanded. Once the logic is executed, a square root function is performed, since the bearing force is proportional to the square of the current in the bearing. This provides a linear function for force versus displacement. Pulse width modulation, synchronized by a high frequency, is used to drive the switching power amplifier. Amplifier feedback is provided by means of current sensing for low frequency disturbances or flux sensing for high frequency disturbances. The power amplifier supplies a switched DC current to its associated bearing quadrant, and shaft location is either maintained or corrected. Response time of the system is not more than one to two milliseconds.

The control circuit for canceling repetitive machinery vibrations uses vibration sensors located on the frame to determine the vibrations of the rotating machine. The measured vibratory signal is analyzed and the appropriate modifications to the bearing control signal effected by one of several adaptive signal processing techniques. If the disturbance is rotor induced, such as shaft imbalance, the bearing control signal will be reduced at the specific frequency of the disturbance to decouple the rotor from the stator and allow the rotor to rotate about its inertial axis, resulting in a perfectly balanced system. If the disturbance is other than rotor induced the bearing control signal will be increased at the specific frequency of the disturbance to couple the rotor to the stator and cause the rotor to act as an inertial mass which moves so as to compensate for the disturbance of the frame.

As will be appreciated by those skilled in the art, there are several suitable adaptive signal processing techniques available and it is the intent of this disclosure that any of these be included since the utility of each may vary according to the particular machine characteristics under consideration. One suitable technique, by way of example, is that illustrated in U.S. Patent No. 4,490,841 entitled "Method and Apparatus for Canceling Vibration".

Shown in Fig. 3 are commutators 50, 52, fourier transformers 40, 46, processor 44, vibration cancelation actuator 54, machine, 56, vibration sensor 58, and synchronization input 60.

The cancelling vibrations required are generated by transforming the sensed residual vibrations from vibration sensor 58 into a plurality of pairs of components by communtator 52 and transformer 40 which together define the residual vibrations at a plurality of different locations in the frequency domain, separately modifying by processor, 44, the independent components representative of each different frequency domain location and transforming the processed components, by transformer 46 and commutator 50, back into a drive signal which is fed to the control loop of the control circuit for the active magnetic suspension system, this signal along with the control signal for positioning the machine rotor acts to create forces equal to, but in opposition to the vibration.

A transform method is used to quantify each of the pairs of components at each selected frequency location and the magnitude of these components can then be controlled independently and in an adaptive manner. The frequency components are separated out in terms of the real and imaginary components of amplitude for each frequency of interest. Each of these components can be canceled separately without interaction.

Changes to the canceling component are used to calculate the transfer coefficient between the actuator and sensor. The transfer coefficients can then be used in the next iteration of a cancellation algorithm to effect a close approximation to the cancellation required to produce a null at the sensor. A variety of algorithms known in the art can be used to produce a very rapid approach to substantially complete cancellation. The minimum time required for the system to adapt itself to optimum cancellation is only a few cycles of the fundamental frequency of the primary repetitive vibration.

A fast Fourier transformer may be used to reconstruct a time waveform from the transformed frequency components. A synchronization input 60 is also provided to the control circuit processor when canceling repetitive vibrations of rotating machines in order to maintain each different frequency component locked to the repetitive rate of the source of vibration.

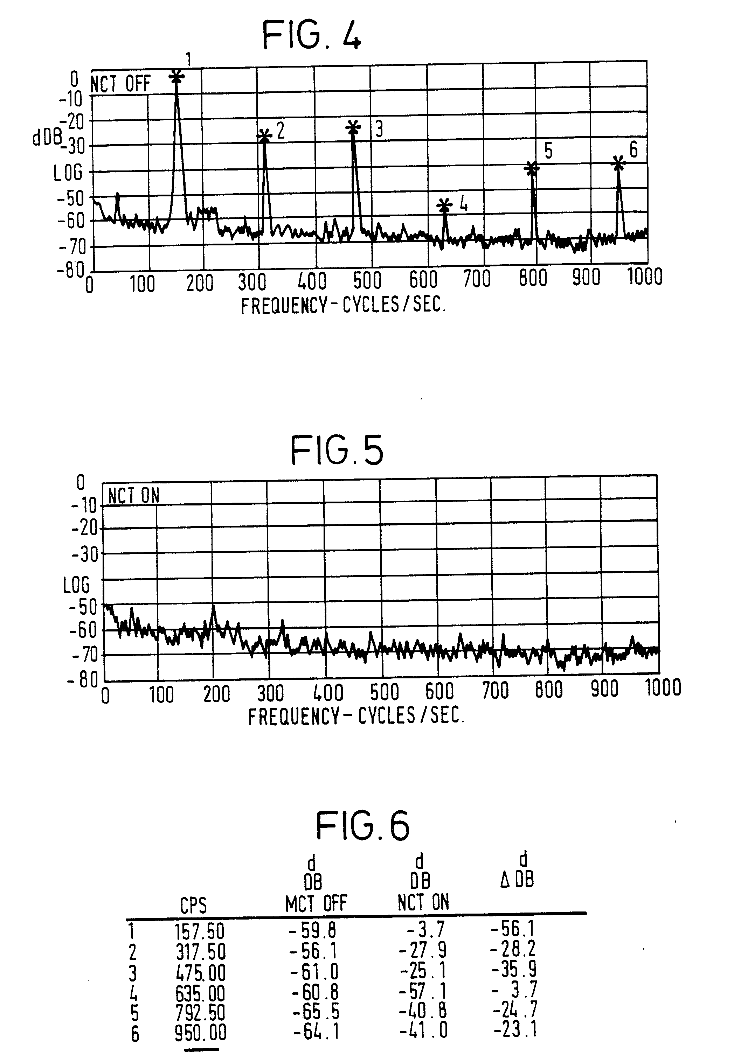

Figs. 4 and 5 contains two plots of vibration vs. frequency by an accelerometer located on the frame of a rotating machine with an active magnetic suspension system. The first plot (Fig. 4) is without the noise cancellation control circuit operating. The second plot (Fig. 5) is with the noise cancellation control circuit operating. The table of Fig. 6 shows the effect of the noise cancellation control circuit for selected frequencies.

This invention is particularly suited to, although not limited to any situation in which it is not possible to achieve a "suitable" phase response between the cancellation actuator and the vibration sensor. Examples of systems with poor phase response include in-room acoustics, vibration in structures and vibration in vessels and aircraft, and this invention shows particular promise in these applications.

While the invention has been described in its preferred embodiments, it is to be understood that the words which have been used are words of description, rather than limitation, and changes may be made within the purview of the appended claims without departing from the true scope and spirit of the invention in its broader aspects.

## Claims

1. In a machine having a rotatable shaft, a vibration cancellation apparatus comprising:

(a) primary active magnetic support bearings supporting the rotatable shaft both radially and axially in the machine;

(b) an electronic control continuously controlling the positional alignment of the rotatable shaft and the stiffness and damping characteristics of said primary support bearings, thereby allowing the rotatable shaft to rotate about its inertial axis and substantially eliminating rotating shaft unbalance forces;

(c) means for sensing the vibrations of a stator or frame of the machine; and

(d) an adaptive signal processor for transforming said sensed vibrations and generating signals in response thereto to adjust said primary support bearings causing the rotatable shaft to move, thereby creating inertia forces to cancel said sensed vibrations.

2. A vibration cancellation apparatus according to claim 1, further comprising secondary auxiliary bearings adapted to contact and support said rotatable shaft on failure of said primary support bearings, said second bearings positioned to prevent the rotatable shaft from contacting said primary support bearings on said failure condition.

3. A vibration cancellation apparatus according to claim 2, wherein said second auxiliary bearings comprise rolling element bearings, the innermost diameter of which are greater than the diameter of said rotatable shaft by an amount which is less than the distance between the surface of said rotatable shaft and said primary support bearings.

4. A vibration cancellation apparatus according to claim 2, wherein said secondary auxiliary bearings comprise journal bearings, the innermost diameter of which are greater than the diameter of said rotatable shaft by an amount which is less than the distance between the surface of said rotatable shaft and said primary support bearings.

5. A vibration cancellation apparatus according to any preceding claim wherein the adaptive signal processor comprises an electronic processing circuit connecting said stator or frame vibration sensors, including synchronising means, a first transformer receiving time waveform samples, and a second transformer producing modified time waveform samples which are fed to the active magnetic control circuits.

6. A vibration cancellation device according to claim 5, wherein the first and second transformer are Fourier transformers.

7. A vibration cancellation apparatus according to any preceding claim wherein said electronic control includes means for controlling the stiffness of said active magnetic bearings at the rotational speed of the rotatable shaft and multiples thereof.

FIG.1

# FIG.2a

EP 0 381 898 A2

Neuvellement d

# FIG. 2b

# FIG.3

## FIG. 4

## FIG.5

## FIG.6

| | CPS | d DB MCT OFF | d DB NCT ON | d Δ DB |
|---|---|---|---|---|
| 1 | 157.50 | -59.8 | -3.7 | -56.1 |
| 2 | 317.50 | -56.1 | -27.9 | -28.2 |
| 3 | 475.00 | -61.0 | -25.1 | -35.9 |
| 4 | 635.00 | -60.8 | -57.1 | -3.7 |
| 5 | 792.50 | -65.5 | -40.8 | -24.7 |
| 6 | 950.00 | -64.1 | -41.0 | -23.1 |